# EUROPEAN PATENT APPLICATION

(11) **EP 2 200 198 A2**
(43) Date of publication of application: **23.06.2010**
(21) Application number: 09179707.6
(22) Date of filing: 17.12.2009
(51) Int. Cl.: H04H 60/46, H04H 40/18

(54) **Method and system for providing a widget service in a broadcasting terminal**

(30) Priority: 18.12.2008 KR 20080129369
(71) Applicant: Alticast Corporation, Seoul 137-858 (KR)
(72) Inventor: Ha, Kil-Su, 137-894, Seoul (KR); Seok, So-Mi, 136-721, Seoul (KR)
(74) Representative: Michalski Hüttermann & Partner Patentanwälte

(57) **Abstract**

A method and a system for providing a widget service are disclosed. The method includes maintaining a user's profile, monitoring at least one of life cycle and user's viewing act, and executing one or more widget application matched to at least one of the user's profile, the life cycle and the viewing act. Accordingly, the method and the system may provide actively the widget service in user' state.

## Description

### CROSS-REFERENCE TO RELATED APPLICATIONS

This application claims priority from Korean Patent Application No. 2008-129369 filed on December 18, 2008, the contents of which are incorporated herein by reference in its entirety.

### TECHNICAL FIELD

The present disclosure relates to a method and a system for providing widget service, more particularly relates to a method and a system for providing dynamically widget service in accordance with user s viewing act, etc. in digital broadcasting service.

### RELATED ART

Generally, a widget, as a personalized program substituted for a web browser in a personnel computer, means an applied program with small size for providing certain information such as weather information, time information, calendar information, calculator information, etc. irrespective of operating of the web browser or requesting a search, etc. after accessing to a specific server.

The widget in the personnel computer is called as various terms such as a clip, a gadget or a panel in accordance with a web service provider.

The widget was mainly used in only the personnel computer in past. However, in recent, the widget has been extendedly used in various devices including a mobile terminal because it could provide personalized service.

On the other hand, in past, the broadcasting service was provided through an analog method. However, in present, a digital broadcasting service has been provided with high definition due to enhancement of a video compression technique, a network transmission technique and processing performance of a broadcasting terminal.

A widget service has been provided in the broadcasting terminal according as the broadcasting service is converted from the analog method into the digital method as described above.

The widget service, for providing data (additional information) directly or indirectly related to a broadcasting service in accordance with subscriber s request, as well as the broadcasting service is expected according as related applications have been developed, wherein the widget service includes weather service, fortune service, news service, stock service, email service, electric program guide (EPG) service, TV shopping service, banking service, call service and Internet search service.

However, the widget service is expected to be executed only when a user selects one of plural preset widget services.

That is, a step of selecting a widget service, which the user wants to output on a screen, through a given interface is needed like in the personnel computer. Accordingly, the widget service is not provided until the user requests it. In addition, it is inconvenient for users because the users must perform further the step of setting the widget service and so on.

Unlike in the personnel computer, the user viewing a television usually expects that a certain service could be provided although he does not specific act.

For example, the user expects that an interface for searching words could be outputted without his act while he is viewing a foreign program with a specific caption, or an interface for purchase of goods, price calculation, or settlement, etc. could be outputted while he is viewing a program related to fashion.

However, a conventional broadcasting service might not satisfy the above desire of the users.

The above information disclosed in this Related Art section is only for enhancement of understanding of the background of the invention and therefore it may contain information that does not form the prior art that is already known in this country to a person of ordinary skill in the art.

### SUMMARY OF DISCLOSURE

Accordingly, the present invention is provided to substantially obviate one or more problems due to limitations and disadvantages of the related art.

An example embodiment of the present invention provides a method and a system for providing a widget service which enable providing conveniently additional service to users using a television.

Another example embodiment of the present invention provides a method and a system for providing a widget service which monitors user s profile, life cycle or viewing act, and enables providing actively a service anticipated to be desired by a user at present in accordance with the monitoring result.

In one aspect, the present invention provides a method of providing a widget service in a broadcasting terminal, the method comprising: maintaining a user s profile; monitoring at least one of life cycle and user s viewing act; and executing one or more widget application matched to at least one of the user s profile, the life cycle and the viewing act.

In another aspect, the present invention provides a recording media readable by a digital processor and having a program of commands executed by the digital processor for the purpose of providing a widget service, the recording media comprising: monitoring at least one of life cycle and user s viewing act; and executing one or more widget application matched to at least one of user s profile, the life cycle and the viewing act.

In still another aspect, the present invention provides an apparatus for providing a widget service comprising: a user profile storing section configured to store one or more of sex, age, birthday, area, favorite channel, favorite VOD, interesting service, viewing time, VOD purchase history and electronic commerce history; a monitoring section configured to monitor at least one of life cycle and user s viewing act; a widget engine configured to determine one or more widget application matched to at least one of the user s profile, the life cycle and the viewing act; and a widget application configured to output a widget for providing certain information or a service on a screen, wherein the widget is executed by the widget engine.

In still another aspect, the present invention provides a system for providing a widget service comprising: a headend configured to transmit a broadcasting signal and a widget engine for the widget service to a broadcasting terminal through a network; and a data server configured to transmit information requested from a widget application through a return path, the widget application being executed by the widget engine. Here, the broadcasting terminal maintains user s profile, and executes one or more widget application matched to at least one of the user s profile, life cycle and viewing act monitored.

A method and a system of providing a widget service according to the present invention may provide a service desired by a user through analysis of the user s profile, life cycle or viewing act although the user does not specific act.

In addition, the method and the system provide a service anticipated to be desired by the user at present through a widget, and thus the user may use additional information or service without interrupting use of other service.

### BRIEF DESCRIPTION OF DRAWINGS

Example embodiments of the present invention will become more apparent by describing in detail example embodiments of the present invention with reference to the accompanying drawings, in which:

FIG. 1 is a view illustrating a system for providing a widget service according to one example embodiment of the present invention;

FIG. 2 is a block diagram illustrating the broadcasting terminal according to one example embodiment of the present invention;

FIG. 3 is a view illustrating a widget engine according to one example embodiment of the present invention;

FIG. 4 is a view illustrating a widget list according to one example embodiment of the present invention;

FIG. 5 to FIG. 10 are views illustrating example screen in accordance with execution of a widget application; and

FIG. 11 is a flow chart illustrating a process of determining the widget application according to one example embodiment of the present invention.

### DETAILED DESCRIPTION

Example embodiments of the present invention are disclosed herein. However, specific structural and functional details disclosed herein are merely representative for purposes of describing example embodiments of the present invention, however, example embodiments of the present invention may be embodied in many alternate forms and should not be construed as limited to example embodiments of the present invention set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. Like numbers refer to like elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between", "adjacent" versus "directly adjacent", etc.).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, embodiments of the present invention will be described in detail with reference to accompanying drawings. On the other hand, in the following description, the same reference number will be used about the same elements irrespective of drawings for the purpose of rapid understanding.

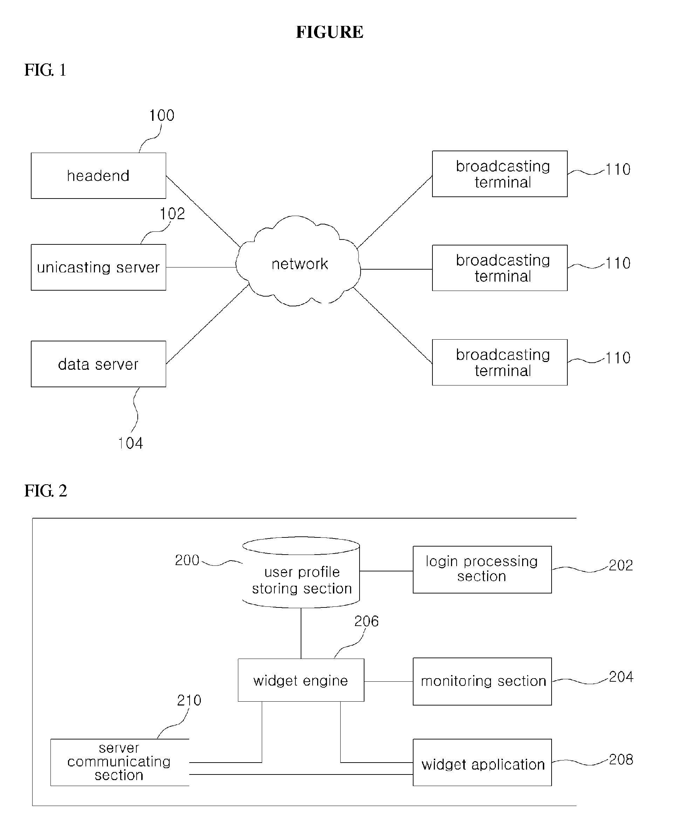

FIG. 1 is a view illustrating a system for providing a widget service according to one example embodiment of the present invention.

In FIG. 1, the system of the present embodiment includes a headend 100, a unicasting server 102 and a data server 104.

The headend 100, the unicasting server 102 and the data server 104 may connected to at least one broadcasting terminal 110 through a network. Here, the network includes a terrestrial network, a satellite network, a cable network and Internet.

The headend 100 transmits a broadcasting signal including a broadcasting program and an application to the broadcasting terminal 110.

The headend 100 transforms a video signal and an audio signal for the broadcasting programs of various channels into predetermined format, and then transmits the transformed signal to the broadcasting terminal 110.

In addition, the headend 100 performs a scheduling function about the broadcasting programs and a transport stream scrambling function of blocking access of users other than a subscriber.

A connection network between the headend 100 and the broadcasting terminal 110 may be defined as a broadcasting network in that the headend 100 broadcasts the broadcasting signal to the broadcasting terminal 110. However, the connection network is not limited as the broadcasting network, and be a unicasting network.

The broadcasting terminal 110 may be a set-top box for outputting the broadcasting program by processing transport stream transmitted from the headend 100 or interpreting and outputting data. However, the broadcasting terminal 110 is not limited as the set-top box, and includes every terminal which enables executing a widget engine and a widget application as described below.

In one example embodiment of the present invention, the broadcasting terminal 110 receives the widget engine, which is an application for a widget service, from the headend 100. Here, the widget engine provides proper widget service to the user in accordance with a user s profile, life cycle or user s viewing act at present.

The widget application is executed by the widget engine, and outputs a widget which enables providing additional information or a certain service on a screen. The widget application used in the present invention means a program executed in the broadcasting terminal 110, and the widget is defined as an interface outputted on the screen by executing the widget application.

The widget application of the present embodiment includes programs for weather, calendar, time, calculator, memo pad, dictionary, provision of additional information related to a broadcasting program, betting in sports, etc., goods search, trend search, settlement, program recommendation, general search, stock, fortune, news, email, message transmission, electronic commerce information and provision of an advertisement and so on.

In one example embodiment of the present invention, a plurality of widget applications may be pre-stored in the broadcasting terminal 110.

In another example embodiment, the widget application to be executed may be transmitted from a remote server at its execution time. Here, the broadcasting terminal 110 receives the widget application to be executed from the unicasting server 102.

A connection network between the unicasting server 102 and the broadcasting terminal 110 may be defined as a unicasting network in that the unicasting server 102 transmits the widget application requested by a specific broadcasting terminal 110 to the broadcasting terminal 110 through a unicast method.

In case that certain widget application is executed in the broadcasting terminal 110, information included in the widget outputted on the screen may be updated in accordance with the user s request or the elapse of time.

For example, news information may be continuously updated in accordance with the time in case of the widget including the news information. Here, the data server 104 transmits the updated news information to the broadcasting terminal 110 in accordance with request of corresponding widget application (news widget application).

In this case, the data server 104 and the broadcasting terminal 110 may be connected through a return path.

In case that the widget application is an application that the user can request certain service, e.g. a widget application for goods search, the widget application transmits information concerning goods name, etc. by inputted by the user to the data server 104 through the return path when the user requests the goods search. The data server 104 may transmit search result of the goods name to the broadcasting terminal 110 through the return path.

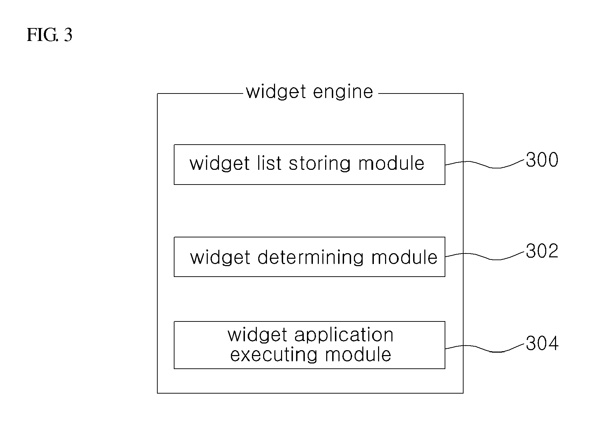

Hereinafter, a process of providing the widget service in the broadcasting terminal 110 will be described in detail with reference to accompanying drawings FIG. 2 and FIG. 3.

FIG. 2 is a block diagram illustrating the broadcasting terminal according to one example embodiment of the present invention.

In FIG. 2, the broadcasting terminal 110 of the present invention includes a user profile storing section 200, a login processing section 202, a monitoring section 204, a widget engine 206, a widget application 208 and a server communicating section 210.

As described above, the broadcasting terminal 110 may the set-top box for processing the transport stream received from the headend 100, and may include a tuner, a demultiplexer and a decoder, etc. like a common set-top box.

Since the constitution for processing of the transport stream is already known to a person of ordinary skill in the art, any further description concerning the constitution will be omitted.

The user profile storing section 200 stores a variety of information related to the user.

In addition, the user profile storing section 200 may store information concerning sex, age, birthday, job, area, identification of the user using the broadcasting terminal 110.

The user profile storing section 200 may also store information concerning favorite channel, favorite broadcasting program, favorite VOD, interesting service, viewing time of the broadcasting program (viewing time and day, etc.), service usage time, download history of contents such as music, VOD purchase history, electronic commerce history and so on of the user. Here, the VOD purchase history and the electronic commerce history may include information concerning VOD purchased by the user, information concerning goods items, and information concerning purchase time.

It is desirable that the user profile storing section 200 stores separately the users profiles because one or more user uses the broadcasting terminal 110 in a house.

In case that parent and children live together in the home, the users profiles may be individually stored for respect users.

The login processing section 202 outputs an interface for the user s login, and processes the login of respective users by using ID and password inputted by the user through the interface and identification information stored in the user profile storing section 200.

This login process is performed for providing the personalized widget service to the user who logins.

The monitoring section 204 monitors user s life cycle and user s viewing act.

The monitoring section 204 monitors the life cycle such as present time and day at which the user uses the broadcasting terminal 110, and monitors the user s viewing act such as channel (broadcasting program) viewed by the user at present time, VOD, interactive service used by the user or contents, e.g. music contents.

The monitoring section 204 may identify the broadcasting program viewed by the user, title of the VOD, user s age, resolution, performer, plot, reply of the viewers and metadata, etc.

Additionally, the monitoring section 204 may monitor whether the user performs channel zapping more than a preset number in a predetermined time without keeping a specific channel.

Constitution related to monitoring of the viewing act by the monitoring section 204 is included in software of the broadcasting terminal 110, i.e. middle, etc., and may be a navigator in a multimedia home platform MHP which is European digital television standard, be a monitor application in an open cable applications platform OCAP which is US digital cable television standard, or be an observer in an advanced common application platform ACAP.

The widget engine 206 executes the widget application corresponding to the user s profile stored in the user profile storing section 200, the life cycle and the user s viewing act monitored by the monitoring section 204.

As described above, the widget engine 206 may be received from the headend 100, and execute the widget application always needed in the broadcasting terminal 110.

However, the widget engine 206 is not limited as the above method, and may be embedded in the broadcasting terminal 110, or be provided to the broadcasting terminal 110 through the return path.

Referring to FIG. 3, the widget engine 206 of the present embodiment includes a widget list storing module 300, a widget determining module 302 and a widget application executing module 304.

The widget list storing module 300 stores one or more widget information matched to each of the user s profile, or the monitored life cycle and the viewing act.

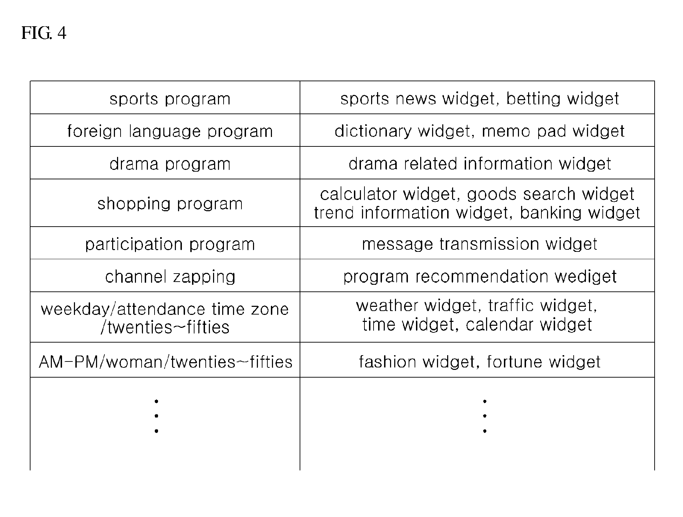

For example, in a widget list of the present embodiment, a sports news widget and a betting widget are matched to the sports program in accordance with the viewing act as shown in FIG. 4. In addition, a dictionary widget and a memo pad widget are matched to foreign language program, and a drama related information widget is matched to a drama program. Furthermore, a calculator widget, a goods search widget, a trend information widget and a settlement (banking) widget may be matched to a shopping program.

Moreover, a message transmission widget may be matched to a participation program in which the user participates through input of a message.

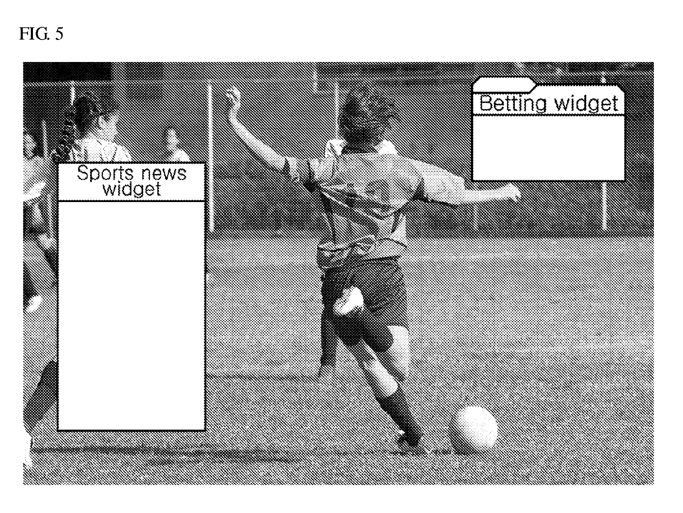

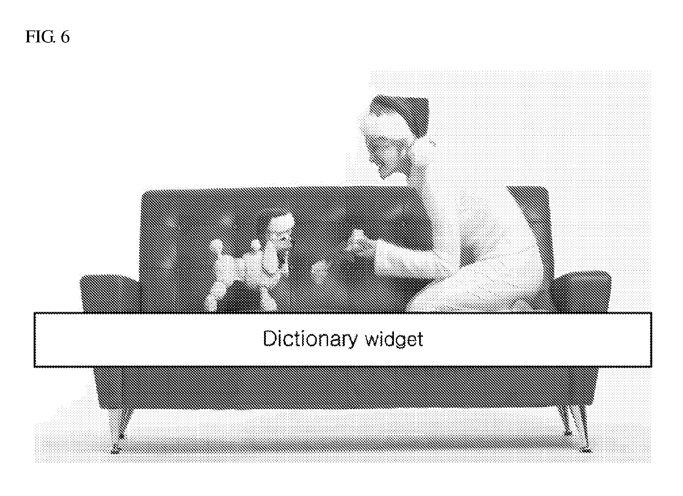

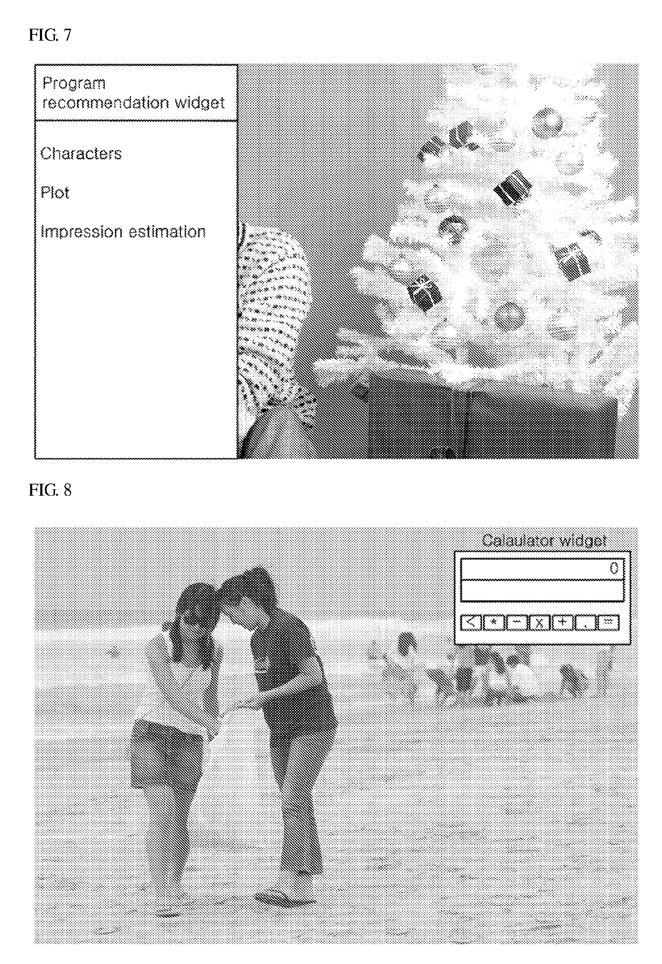

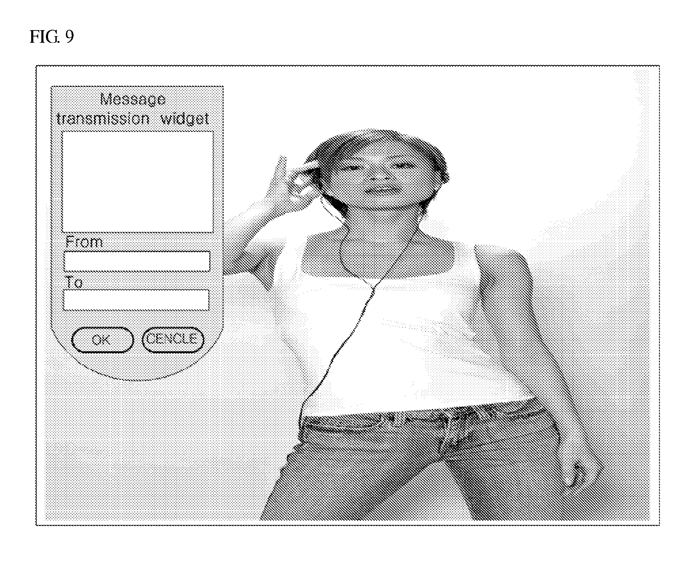

The widget related to present viewing act of the user may be outputted on the screen in accordance with the widget list as shown in FIG. 5 to FIG. 9.

A program recommendation widget may be matched to a channel zapping considering user s channel usage pattern in case that the channel zapping is occurred more than a preset number in a predetermined time.

A program shown in the program recommendation widget may include a broadcasting program provided in real time and VOD provided in accordance with the user s request.

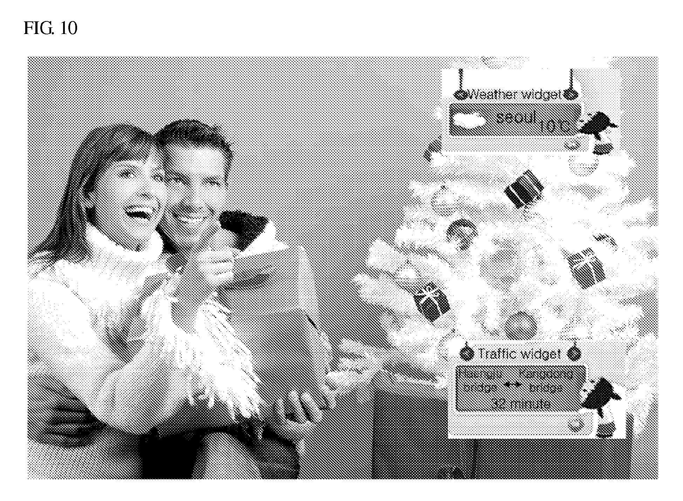

On the other hand, a weather widget, a traffic information widget, a time widget and a calendar widget may be matched to a weekday/time in consideration of the life cycle including day and time and the user s profile as shown in FIG. 10 in case that the user goes to the office in the morning and is in his twenties to fifties.

In addition, the fashion widget and a fortune widget may be matched to forenoon-afternoon/woman/twenties to fifties.

The widget determining module 302 determines a widget proper to the present state by using the widget list and the user s profile, the life cycle and the viewing act.

It is desirable that priorities are set to the widget applications to be executed included in the widget list. In case that the widget application matched to the user s viewing act and the widget application in accordance with the life cycle exist, the widget determining module 302 may determine to execute preferentially the widget application having high priority.

For example, in case that the user in twenties views a drama in the afternoon, the widget determining module 302 determines to execute a widget application for providing information related to the drama and a fashion/fortune widget application in accordance with the viewing act. Here, the fashion/fortune widget application may have higher priority than the widget application for providing information related to the drama. In this case, the broadcasting terminal 110 executes preferentially the fashion/fortune widget.

However, since the widget occupies small area of the screen, it could be easily thought by a person of ordinary skill in the art in that a plurality of widget applications may be simultaneously executed.

The widget application executing module 304 executes the determined widget application.

Since various kinds of widgets could be usually provided in the broadcasting terminal 110, it is inefficient for the broadcasting terminal 110 to store in advance every kind of widget applications.

The widget application executing module 304 detects whether or not the determined widget application is stored in the broadcasting terminal 110, and requests desired widget application through the server communicating section 210 in case that the widget application is not stored in the broadcasting terminal 110.

The request of the widget engine may be transmitted to the unicasting server 102 via the data server 104. The unicasting server 102 transmits the requested widget application to the broadcasting terminal 110 through the network.

In above description, the widget application is requested to the unicasting server 102 via the data server 104. However, the broadcasting terminal 110 may request directly the widget application to the unicasting server 102.

The widget engine executes the transmitted widget application.

The widget application 208 is a program executed through the widget engine 206, and outputs a widget for providing certain information or a service on the screen.

The widget application 208 may output preferentially information anticipated to be needed by the user logged-in at present time in consideration of the user s profile.

For example, the widget application for providing weather information or traffic information may output preferentially weather information or traffic information about an area in which the user is located.

Additionally, a widget application for program recommendation may output preferentially a program anticipated to be favored by the user in consideration of the user s viewing history.

In case that personalized information is needed to be provided in accordance with the user s profile or in case that the user requests additional information or searching, the widget application 208 requests corresponding information to the data server 104.

The widget application 208 outputs newest information received from the data server 104 on the widget.

The broadcasting terminal 110 of the present embodiment executes one or more proper widget application in accordance with the user s profile, the life cycle or the viewing act. Furthermore, the broadcasting terminal 110 operates so that the user verifies directly desired information through the outputted widget, and thus user s satisfaction may be enhanced.

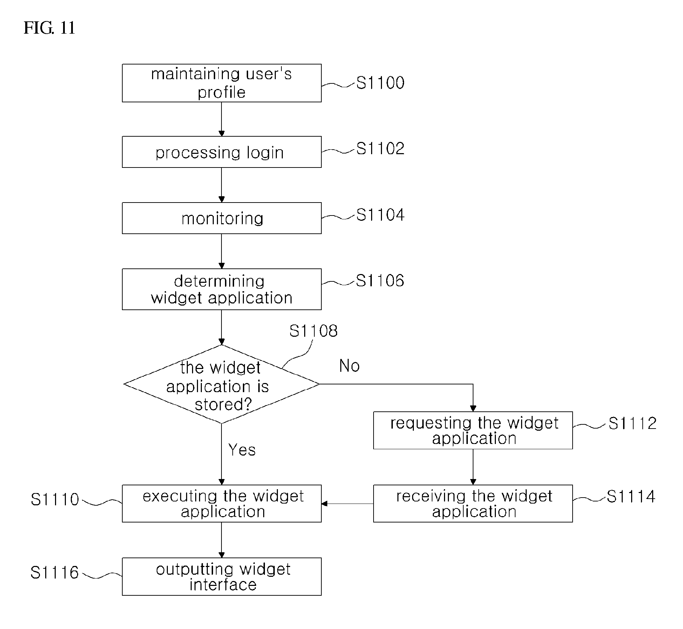

FIG. 11 is a flow chart illustrating a process of determining the widget application according to one example embodiment of the present invention.

In FIG. 11, the broadcasting terminal 110 maintains the user s profile in step of S1100, and processes the user s login in step of S1102.

The login is performed for providing individually the service matched to respective users, but is not necessary. Accordingly, the step S1102 may be omitted.

In step of S1104, the broadcasting terminal 110 monitors the life cycle and the user s viewing act after processing the login. Here, the broadcasting terminal 110 monitors the life cycle such as present time and day broadcasted by interworking with specific timer, and monitors the viewing act in accordance with user s channel selection or service selection.

In step of S1106, the widget engine 206 of the broadcasting terminal 110 determines the widget application to be executed at present by using the monitored life cycle, the viewing act and the user s profile.

In step of S1108, the widget engine 206 detects whether or not the determined widget application is stored.

In step of S1110, in case that the widget application is stored, the widget application executes corresponding widget application.

In step of S1112, in case that the widget application is not stored, the widget engine 206 requests the widget application to the unicasting server 102. In case that the widget application is received from the unicasting server 102 in step of S1114, the widget engine 206 executes the received widget application in step of S1110.

In step of S1116, the widget application 208 outputs the widget for providing certain information or a service on the screen.

If information considering the user s profile is provided to the widget outputted on the screen, the widget application 208 analyzes the user s profile, requests personalized information in accordance with the analyzed user s profile to the data server 104, and outputs information received from the data server 104 on the screen.

The method of providing the widget service of the present invention could be recorded as program command in a computer readable media, wherein the program command may be executed through various computer means. The computer readable media may include program command, data file, data structure, etc., or combination of the program command, the data files, the data structure, etc. The program command recorded in the media is command newly set for the present invention, or is command known in a person of ordinary skill in the computer software art. The computer readable media includes a magnetic media such as a hard disk, a floppy disk and a magnetic tape, an optical media such as CD-ROM, DVD, a magneto-optical media such as a floptical disk, ROM, RAM and a flash memory, etc. The program command includes machine code generated by a compiler and high-level language code executable by a computer through an interpreter, etc. The hardware device may be replaced with one or more software module. In addition, the software module may be replaced with one or more hardware device.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of providing a widget service in a broadcasting terminal, the method comprising:
maintaining a user's profile;
monitoring at least one of life cycle and user's viewing act; and
executing one or more widget application matched to at least one of the user's profile, the life cycle and the viewing act.

2. The method of claim 1, wherein the user's profile includes one or more of sex, age, birthday, job, area, favorite channel, favorite broadcasting program, favorite VOD, interesting service, viewing time of the broadcasting program, service usage time, download history of contents such as music, VOD purchase history and electronic commerce history of the user.

3. The method of claim 2, further comprising:
processing user's login,
wherein the user's profile is separately stored for respective users using the broadcasting terminal, and the widget application is executed in consideration of the logged-in user's profile.

4. The method of claim 1, wherein the step of monitoring includes monitoring present time, day, user's viewing channel, viewing broadcasting program, viewing VOD, interactive service used at present and contents.

5. The method of claim 1, wherein the step of monitoring includes detecting whether or not channel zapping is occurred more than preset number in predetermined time.

6. The method of claim 5, wherein a widget application for program recommendation is executed in case that the channel zapping is occurred more than the preset number.

7. The method of claim 6, wherein the widget application for the program recommendation outputs preferentially a VOD list corresponding to user's favorite VOD genre or new VOD in accordance with the user's profile.

8. The method of claim 1, wherein the widget application outputs a widget, for at least one of weather, calendar, time, calculator, memo pad, dictionary, provision of additional information related to a broadcasting program, betting, goods search, trend search, settlement, program recommendation, general search, stock, fortune, news, email, message transmission, electronic commerce information and provision of an advertisement, on a screen.

9. The method of claim 1, wherein the widget application outputs preferentially information anticipated to be desired by the user in accordance with the user's profile.

10. The method of claim 1, wherein in case that plural matched widget applications exist, a widget application having above preset priority is preferentially executed in accordance with priorities of the widget applications.

11. The method of claim 1, wherein the step of executing the widget application includes:
detecting whether or not the matched widget application is stored; and
receiving the widget application from a unicasting server through a unicasting method in case that the widget application is not stored, and executing the received widget application.

12. The method of claim 1, wherein the widget application requests certain information to a data server through a return path, receives the information from the data server, and outputting the received information.

13. A recording media readable by a digital processor and having a program of commands executed by the digital processor for the purpose of providing a widget service, the recording media comprising:
monitoring at least one of life cycle and user's viewing act; and
executing one or more widget application matched to at least one of user's profile, the life cycle and the viewing act.

14. An apparatus for providing a widget service comprising:
a user profile storing section configured to store one or more of sex, age, birthday, area, favorite channel, favorite VOD, interesting service, viewing time, VOD purchase history and electronic commerce history;
a monitoring section configured to monitor at least one of life cycle and user's viewing act;
a widget engine configured to determine one or more widget application matched to at least one of the user's profile, the life cycle and the viewing act; and
a widget application configured to output a widget for providing certain information or a service on a screen, wherein the widget is executed by the widget engine.

15. A system for providing a widget service comprising:
a headend configured to transmit a broadcasting signal and a widget engine for the widget service to a broadcasting terminal through a network; and
a data server configured to transmit information requested from a widget application through a return path, the widget application being executed by the widget engine,
wherein the broadcasting terminal maintains user's profile, and executes one or more widget application matched to at least one of the user's profile, life cycle and viewing act monitored.
